# EUROPEAN PATENT SPECIFICATION

(11) **EP 4 367 593 B1**
(45) Date of publication and mention of the grant of the patent: **21.10.2026**
(21) Application number: 22743858.7
(22) Date of filing: 05.07.2022
(51) Int. Cl.: G06F 21/78, G06F 21/57, G06F 21/55, G06F 21/53, H04L 9/32, H04L 9/08, H04L 9/14, G06F 12/14, G06F 3/06, G06F 11/14, G06F 11/1446, G06F 12/02

(54) **METHOD AND APPARATUS FOR SECURELY BACKING UP AND RESTORING A COMPUTER SYSTEM**
VERFAHREN UND VORRICHTUNG ZUR GESICHERTEN SICHERUNG UND WIEDERHERSTELLUNG EINES RECHNERSYSTEMS
PROCÉDÉ ET APPAREIL POUR SAUVEGARDER ET RESTAURER DE MANIÈRE SÉCURISÉE UN SYSTÈME INFORMATIQUE

(30) Priority: 06.07.2021 US 202117367719
(43) Date of publication of application: 15.05.2024
(73) Proprietor: Cyntegra Ltd, London TW9 1PL (GB)
(72) Inventor: CHALLENER, David, London Greater London TW9 1PL (GB)
(74) Representative: Hunter, Christopher Jack Owen
(86) International application number: PCT/GB2022/051725
(87) International publication number: WO 2023/281254

(56) References cited:
- WO-A1-2021/107177
- US-A1- 2017 076 096
- US-A1- 2020 012 803

## Description

### Technical Field

This disclosure relates generally to securing computer systems and networks. More particularly, but not necessarily exclusively, this disclosure relates to securely backing up and restoring a computer system.

### Background of the Invention

Digitization of information provides multiple advantages, including ease of transmission of information, reliability of records and easy duplication. However, digital records may also be vulnerable to various attacks from malicious actors, who may employ "malware" to steal or corrupt digital records from computer systems.

One category of malware is "ransomware" software, which often functions by encrypting the digital records of a user with an encryption key known only to the malicious actor. Given the strength of modern encryption algorithms, retrieving the digital records without knowledge of the encryption key may be, in practice, unfeasible. The malicious actor can then demand payment from the user in exchange of the encryption key that enables decryption of the encrypted digital records.

Modern ransomware is able to compromise the operating system of computers to encrypt stored data while remaining entirely undetected for long periods. In response, some anti-ransomware methods aim to securely store back-ups of data only when the system is deemed to be uncompromised. Such methods require the computing device to perform a predefined boot sequence to ensure that the system is uncompromised before storing backups on the secure storage.

Many modern computer systems are configured to be continuously operational, and as such cannot periodically reboot to perform the predefined boot sequence to protect files against malware. For example, servers or IoT devices are often installed and configured such that they provide an uninterrupted service for extremely long periods of time that can last months or even years. Therefore typical methods for performing safe backup, as described above, cannot be employed to secure these devices from ransomware attacks.

In view of the above, there is a need to provide improved ransomware protection for computing systems. In particular, there is a need for systems which are not required to reboot in order to provide safe back-ups of digital files.

US 2020/012803 A1 describes a system for protecting user-editable files against unauthorized data alteration or against compromised operating systems or compromised applications. It comprises untrusted operating environments and a trusted operating environment. One or more untrusted operating environments makes available user-editable files for creation and editing, and are stored in a non-protected partition of storage drive. The trusted operating environment provides an authentication key to access protected partition of storage drive, and stores copies of user-editable files in a protected partition of storage drive.

US 2017/0076096 A1 describes a method for preventing access by malware to locally backed up data. A method for providing malware protection in connection with processing circuitry including hardware resources and software resources managed by a primary operating system may include providing a trusted operating system to control access to a portion of a local storage area of the hardware resources. In this context, only the trusted operating system is configured to enable writing to the portion of the local storage area. The method may further include storing backup files for the primary operating system in the portion of the local storage area responsive to the trusted operating system granting access to write to the portion of the local storage area.

### Summary of the Invention

According to a first aspect of the invention there is provided a method as set out in claim 1.

According to a second aspect of the invention there is provided a system as set out in claim 10.

Advantageously, the first and second aspects enable data to be backed-up in an incremental manner without having to power off and reboot the computer system. Thus the normal functionality of the computer system is unaffected and the method can be applied to computing devices like servers or IoT devices that must provide continuous functionality for extremely long periods of time.

According to a third aspect of the invention there is provided a computer-readable medium as set out in claim 15.

### Brief Description of the Drawings

Embodiments of the invention will now be described, by way of non-limiting examples only, with reference to the following accompanying figures, in which:
Figure 1 is a schematic diagram of a system architecture of an apparatus like a server or laptop for providing ransomware protection.
Figure 2 is a flow chart of a method for providing ransomware protection to a computer system like the one illustrated in Figure 1.
Figure 3 is a schematic diagram of a system architecture of an apparatus like a device using an ARM architecture for providing ransomware protection.
Figure 4 is a flow chart of a method for providing ransomware protection to a device like the one illustrated in Figure 3.
Figures 5a-5c schematically illustrate the effect of a method according to the invention for securing data of a computer system from malware on a storage media of the computer system.
Figures 6a-6c schematically illustrate the effect of another method according to the invention for securing data of a computer system from malware on a storage media of the computer system.
Figure 7 is a flow chart of a method according to the invention for recovering from a compromised computer system files that were previously backed-up using any of the methods illustrated in Figures 2 or 4.
Figure 8 is a flow chart of a method according to the invention for configuring a computer system to incrementally back-up using any of the methods illustrated in Figures 2 or 4.

### Detailed Description of Embodiments of the Invention

The present invention relates to a method and system that can be used to protect data of computer system from ransomware attacks. The method relies on ensuring an accessible recent back-up of the data that the ransomware encrypts is still available to the user. Thus, the user can restore a recent version of the affected data, reducing the severity of the ransomware attack. The method is also applicable even when there is no malware attack, when a user wants to restore a computer system to a state in a previous point in time.

In one example, a server or other computer system is being used to keep data necessary for the operation of a business. The server comprises at least one storage media that can designate at least one region of that media as write-protected (read only), under control of a storage authorization (such as a password). The server also comprises a security element such as a TPM, which can be used to release use of an authorization only when there is evidence that a trusted, non-compromised, OS is running on the platform. The server also comprises a CPU which is designed to be used for dynamic launching of a TrustedOS. This can be done by following the DRTM specification of the Trusted Computing Group.

Given these hardware elements, the system is initially set up with a write protected region that has a Recovery Operating System (RecoveryOS) which can be optionally set as the default initial bootable OS. In some embodiments of the invention, the write protected region that has RecoveryOS also usually contains a complete copy of the initially set up production OS, or PrimaryOS. Additionally a region of the drive that may be adjacent to this region is configured to be readable and writable for writing a backup. Primary OS may be in another read/write region of the drive. The secure element is configured so that it will release the storage authorization only if either the dynamic TrustedOS is running in an uncompromised state or that the Trusted Recovery OS is running in an uncompromised state.

When the PrimaryOS is running, it may create an incremental backup in the first region set for backup. Periodically it may launch TrustedOS. When launched, TrustedOS requests the storage media authorization from the secure element. The TPM checks if the TrustedOS is identical to the copy designated as trusted, or alternatively if another root of trust can be verified. If it is, it releases the authorization to the TrustedOS. The TrustedOS then uses the authorization to make the newly created incremental backup write protected, designates a new area of the storage media as the target for the next incremental backup, destroys any lingering copy of the authorization of the storage media in memory, and returns control of the platform to the production OS.

In the case that the PrimaryOS gets compromised, a power cycle of the machine is used to bring the platform under the control of the RecoveryOS. This OS is write protected, so it cannot be compromised, and hence will be able to boot the system. The RecoveryOS requests the secure element give it the authorization for the storage media. The secure element checks that the RecoveryOS is running uncompromised and releases the authorization to the RecoveryOS.

The RecoveryOS may then provide the user with the ability to use the backed up PrimaryOS and a selected set of incremental backups to reset the system to the state it was in at a user selected previous time.

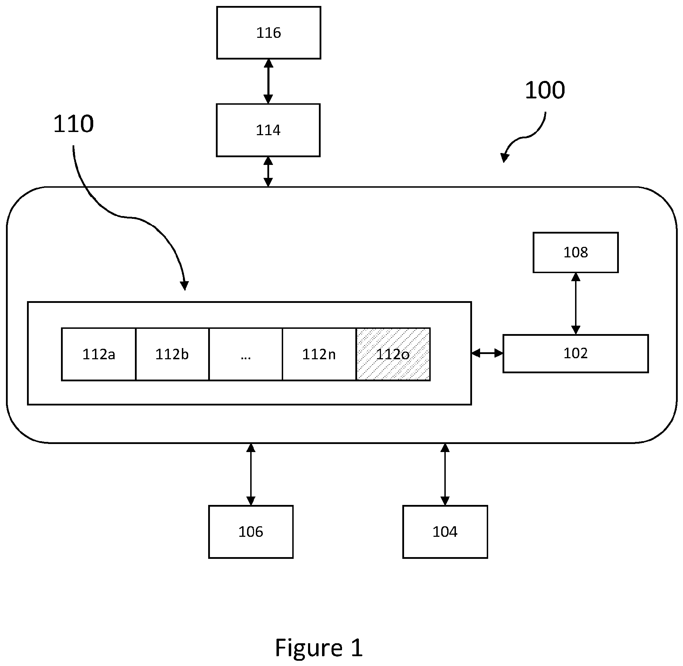

Figure 1 schematically illustrates an apparatus that can be used to implement a method for protecting a computer system 100 from malware attacks, and specifically ransomware attacks. The computer system 100 may be a server, a laptop or a PC using x64 or x86 architecture. The computer system of Figure 1 is configured to use a Primary Operating System (PrimaryOS) for incrementally backing-up files in a manner that provides malware protection, as explained in more detail below. PrimaryOS may be any operating system such as any version of MS Windows, any Linux distribution such as Debian, Red Hat Linux or the like, any version of MacOS or other Unix-based operating systems.

Computer system 100 comprises a processor 102. In other embodiments, the computer system may comprise multiple processors. Computer system 100 also comprises a user interface 104, a device interface 106 and a network interface 114. Each of these interfaces may be optional, depending on the particular computer system set-up. The user interface 104 may be used by a user to provide inputs to the computer system 100. The user interface 104 may comprise a keyboard, a mouse or a touch-based input device, or a combination of these. The user interface 104 may also provide an output which may be recognised by a user of computer system 100, such as a screen, a speaker or the like.

The device interface 106 enables peripheral devices (not shown) to be communicatively coupled to the computer system 100. These peripheral devices may comprise external storage devices, for example removable solid-state technology storage devices or self-encrypting devices. The networking interface 114 enables the computer system 100 to be communicatively networked with other devices (not shown), through local networks or the internet. The networking interface 114 may comprise a wired or wireless coupled with other devices. The networking interface 114 may enable the computer system 100 to store or retrieve data from an online or cloud storage 116.

Computer system 100 also comprises a secure element 108. The security element 108 may be a secure cryptoprocessor such a Trusted Platform Module (TPM). For example, the TPM 108 may comply with the TPM 2.0 specification or previous TPM specifications. The secure element is communicatively coupled to the processor 102. The TPM 108 is a dedicated processor designed to undertake secure cryptographic operations. For example, the TPM 108 may be used to secure hardware of the computer system 100, by using integrated cryptographic keys and/or authorizations that can be provided when a set of predefined conditions are satisfied. Further details of the operation of the TPM will be provided below. Although the TPM 108 of Figure 1 is a discrete processor, other embodiments of the invention may comprise alternative implementations, such as TPMs integrated in the processor 102, firmware TPMs that are implemented along with the UEFI software, hypervisor TPMs or software TPMs. In some embodiments the TPM 108 is not accessible by a user of the computer system 100. In some embodiments, the TPM 108 resides in a read-only memory of the computer system 100. The TPM 108 may be configured to perform operations that can verify a dynamically launched ephemerally running trusted software or trusted operating system, TrustedOS, such as one launched using a Dynamic Root of Trust Measurement (DRTM) operation for measured platform initialization while the computer system 100 is in a running state of operation, i.e. during runtime of the PrimaryOS. As such, a DRTM operation can be used to determine if the computer system has been at least partially compromised or not during runtime of a TrustedOS. In some embodiments, the TPM can perform a Static Root of Trust Measurement (SRTM) or operation where the entire boot chain is measured and determined if it is as previously defined, or in other words, if the boot chain is uncompromised. In some embodiments, the TPM can perform a Core Root of Trust Measurement (CRTM) during boot process for subsequent attestation of other firmware and software that is executed on the computer system.

Computer system 100 also comprises a storage media 110. Storage media 110 is split into n contiguous and non-overlapping portions or ranges 112a, 112b, ..., 112n of logical blocks. Each logical block may be assigned a unique address and thus each portion may comprise a set of logical block addresses (LBAs). Additionally, the storage media 110 may be split into partitions. A partition may comprise a number of portions. In some embodiments, the storage media 110 may comprise only partitions, and the partitions may not be separated into smaller portions. This arrangement may simplify the file hierarchy of the storage media 110. In some embodiments, all of the partitions and/or portions of the storage media 110 may be configured to be writable. In other embodiments, only some of the partitions and/or portions may be configured to be writable, with the remaining partitions being configured to be read-only. Portions or partitions that are read-only may be referred to as "locked", while portions or partitions that are writable may be referred to as "unlocked" accordingly. In some embodiments storage media 110 may be removable from the computer system 110 for improved portability. For example, in some embodiments, storage media 110 may be an SD or Flash card, an external Solid State Drive etc.

In the embodiment of Figure 1 the storage media 110 comprises a portion 112o on which the PrimaryOS has been installed or stored. In the embodiment of Figure 1 portion 112o has been configured to be a read-only portion of the storage media 110 as indicated by the illustrated portion being shaded. In other embodiments however, the PrimaryOS may be stored in a writable portion of the storage media 110.

The PrimaryOS includes an application which will be referred to as the TrustedOS. The TrustedOS may be configured to assume control of the hardware resources and software resources of the computer system and request cryptographic keys and/or authorizations from the TPM. The TrustedOS may be small enough such that the total of it can be loaded in a kernel memory accessible by the processor 102 of the computer system 100. Although in the illustrated embodiment the TrustedOS is an application that runs on the PrimaryOS, in other embodiments, TrustedOS may be an entirely separate operating system that may be loaded on kernel memory during runtime of the PrimaryOS to assume control of the hardware resources and software resources of the computer system. In some embodiments, the TrustedOS may be stored on a different portion to the PrimaryOS. In some embodiments, TrustedOS may be stored on a different storage media to the PrimaryOS. In some embodiments, TrustedOS may be stored on a read-only memory of the computer system 100.

In some embodiments, storage media 110 may comprise a self-encrypting drive according to the OPAL specifications wherein ranges of LBAs are associated with an encryption key, and all data read or written on these ranges are encrypted or decrypted with the respective encryption key of each range. Alternatively or additionally, storage media 110 may comprise drives according to Opalite specifications (to provide data-at-rest protection of user data via data encryption and access controls and pre-boot authentication) or Pyrite specifications (thus blocking or granting access to data based on logical operations). In some embodiments, storage media 110 may be configured such that authorization is required to lock or unlock portions and/or partitions of the storage media 110. In some embodiments, storage media 110 may be configured such that authorization is required to read and/or write entries in a partition table of the storage media 110. In embodiments in which authorization is required to lock or unlock portions and/or partitions of the storage media 110 or to read and/or write entries in a partition table of the storage media 110, this authorization may take the form of knowledge of a password or a cryptographic key. In some embodiments the authorization may be verified by a password-based system, made accessible through a D-RTM operation and/or a Trustzone operation.

In some embodiments, the TPM 108 may store and/or seal cryptographic keys and/or authorizations (e.g. passwords) that are necessary for the storage media 110 to lock or unlock certain partitions or portions. Additionally or alternatively, the TPM 108 may store and/or seal cryptographic keys and/or authorizations that are necessary to manipulate a partition table of the storage media 110. The TPM may be configured to export any of the above cryptographic keys and/or authorizations in response to a successful operation comprising a root of trust measurement, (e.g. a DRTM, a CRTM and/or a SRTM process). In the context of this specification, an authorization may refer to any information that enables an entity to prove to another entity that they are entitled to perform an action, i.e. that they satisfy predefined conditions for performing said action.

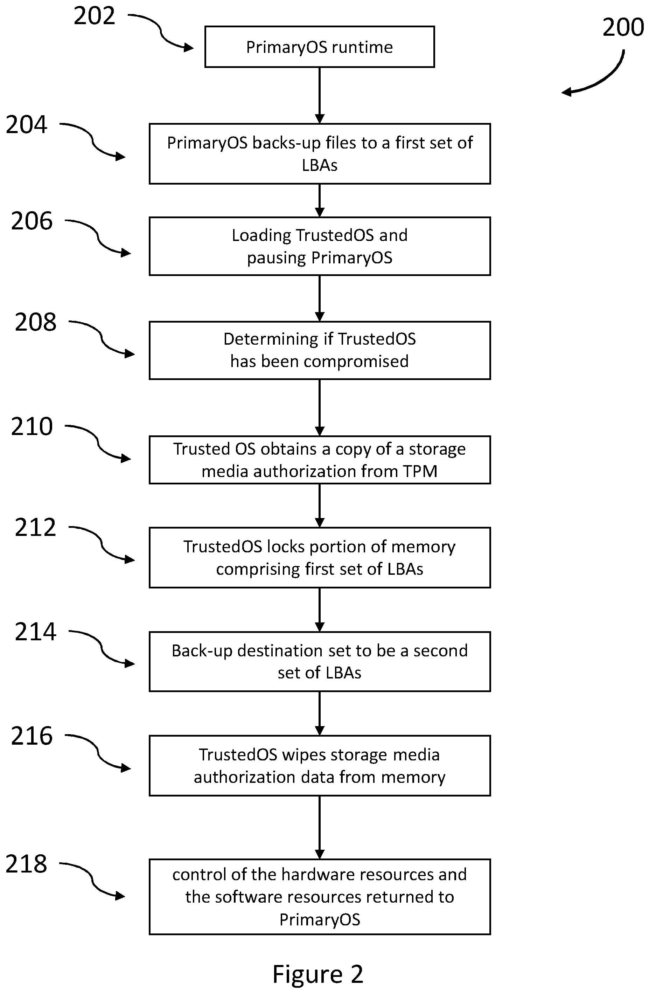

The present disclosure includes three main aspects. These are: 1) the manner in which the system performs backups; 2) the manner in which the system us recovered in the event of a malware attack; and 3) the manner in which the system is initially set up. Figure 2 illustrates a flow chart 200 of a method for providing system backups for a computer system 100, such as the one illustrated in Figure 1. This method assumes that the computer system is operating normally, under the control of the PrimaryOS.

At step 202, the computer system 100 is operating under PrimaryOS runtime. The computer system 100 has booted into the PrimaryOS, and the PrimaryOS is responsible for managing hardware resources and software resources, and for backing-up files. The PrimaryOS is configured to provide backups of the computer system or of files generated by or stored in the computer system. PrimaryOS may provide backups periodically, e.g. once a minute, once an hour, once a day or once a week, or any other reasonable backup period. Additionally, or alternatively, PrimaryOS may back-up at least one file whenever the at least one file or subdirectory hosting the at least one file is changed. Additionally, or alternatively, PrimaryOS may back-up files of only predefined types to reduce the size of the back-ups.

At step 204, the PrimaryOS backs-up files to a first set of logical block addresses of storage media 110, in which the first set of logical block addresses are on the first portion 112a of the storage media 110. Backing-up files may comprise incremental back-ups, in which the PrimaryOS only backs-up the data that has changed in each file since the previous backup, or full back-ups of each file irrespectively of whether the file has been previously backed-up. In some embodiments, the first back-up performed by the PrimaryOS may be a full back-up, which may comprise copies of all user-created files, and all files necessary to return the computer system to its initial state, including installation files for PrimaryOS.

At step 206, TrustedOS is loaded, PrimaryOS enters a paused state (i.e. the execution environment or runtime environment of the PrimaryOS is paused) and at step 208 an RTM operation is executed to determine if TrustedOS is compromised, e.g. by checking if the TrustedOS is in a predetermined state or not. This is not done here as part of the recovery process, but in order to determine whether TrustedOS has been compromised and whether it should obtain authorization to lock the first portion 112a of the storage media 110. In some embodiments, if the TrustedOS is compromised, then no backup should be made. This is especially important if the backup is arranged to overwrite the previous backup. In some embodiments, if the TrustedOS is compromised as indicated by the RTM or DRTM operation concluding unsuccessfully, the computer system 100 may inform the user that the system is at least partially compromised, and that the system should be rebooted for a recovery process to begin as explained later. In some embodiments, the reboot process may happen automatically, although critical infrastructure like servers would likely omit a feature of automatic rebooting after a compromise was detected to ensure no loss of service or data.

Step 206 and/or step 208 may comprise loading TrustedOS to a CPU memory, e.g. a kernel memory and performing a DRTM operation on the contents of the kernel memory comprising the TrustedOS. The DRTM operation may be considered successful if the contents of the kernel memory comprising the TrustedOS match predefined values stored in Platform Configuration Registers. In response to determining that the TrustedOS has not been compromised, or in other words that the DRTM operation was successful the process proceeds to step 210. Step 206 may be scheduled to occur periodically at predefined times, or in response to the computer system detecting a period of low activity.

At step 210, the TrustedOS requests via the processor 102 from the TPM 108 a copy of a storage media authorization. The storage media authorization may be locked to values in predefined Platform Configuration Registers (PCR) of the TPM 108, for example, PCR 17 and or 18. The storage media authorization may be a password sealed in the TPM and inaccessible by the processor during PrimaryOS runtime. The TPM 108 may be configured to refuse decryption of authorizations or passwords or to refuse NV indexes to be read if the PCR registers of the TPM do not contain specific predetermined values. However, a successful DRTM operation that verifies that TrustedOS is as predefines will result in the TPM providing to the TrustedOS a copy of the storage media authorization.

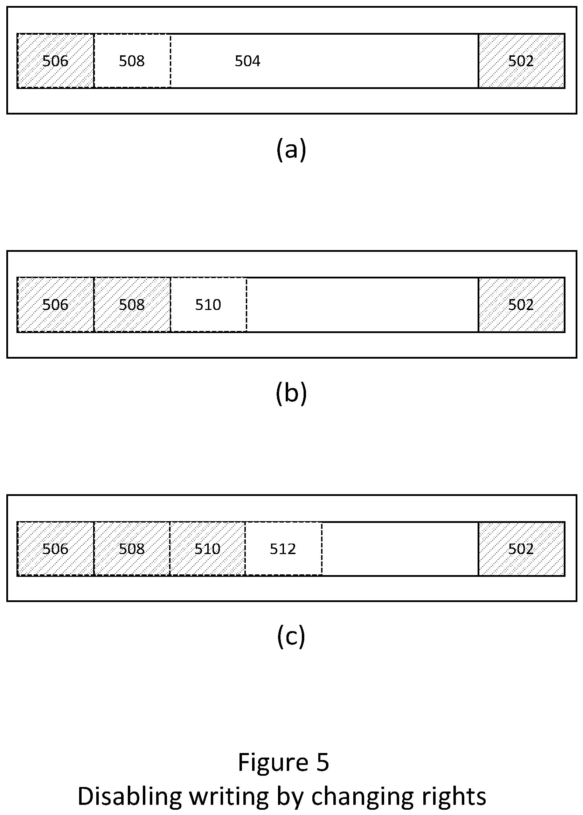

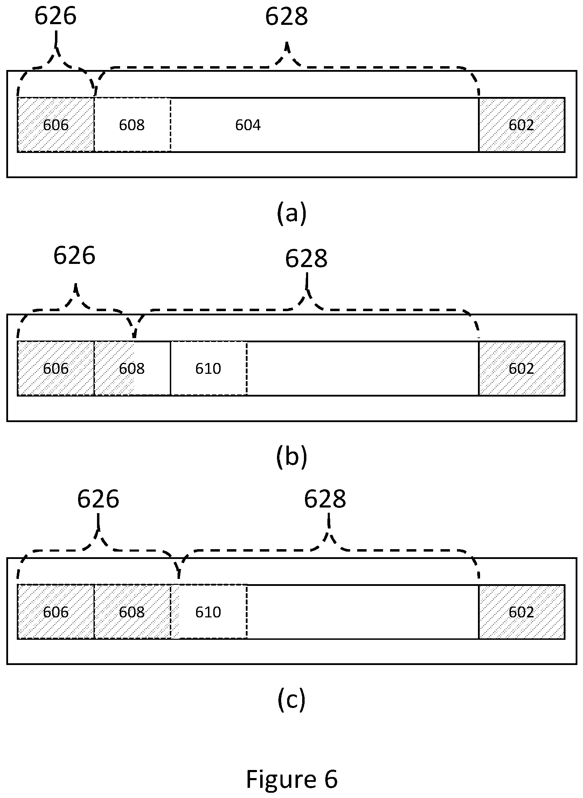

At step 212, the TrustedOS disables writing to the first portion 112a of the storage media 110, the first portion 112a comprising the first set of logical block addresses. This is done in order to lock the first backup. The process of disabling writing to the first portion 112a of the storage media 110 will be explained further in association with Figures 5 and 6. At step 214, the TrustedOS configures PrimaryOS so that during the next backup, the PrimaryOS will back-up files to a second set of logical block addresses on a second writable portion 112b of the storage media 110.

At step 216, the TrustedOS may optionally erase the copy of a storage media authorization that was used to lock the first portion 112a from any memory accessible by the PrimaryOS. At step 218, the TrustedOS returns control of the hardware resources and the software resources to the PrimaryOS. Step 218 may be considered as resuming the execution environment of the PrimaryOS.

Advantageously, the process of Figure 2 enables the computer system 100 to back-up data in portions of the storage media that cannot be affected by malware later by virtue of residing in read-only parts of the storage media after completion of method 200. In the case where the TrustedOS becomes compromised or that PrimaryOS is manipulated to load a malware instead of TrustedOS, this would result in the RTM process of step 206 being unsuccessful, and the TPM would not provide a copy of the storage media authorization. This in turn ensures that the previously backed-up files would remain in a portion of the storage media that would be read-only, and safe from the malware.

Another advantage of the process of Figure 2 is that backing-up data or files happens during regular runtime of the PrimaryOS. Therefore, backing-up data does not require the computer system 100 to reboot. This is especially useful when the computer system 100 is server which is configured to run continuously for long periods of time. Unlike known anti-malware that can only back-up files after a predefined boot sequence has been verified, and therefore require the system to reboot, a system according to the invention can go months or even years without a pause in service.

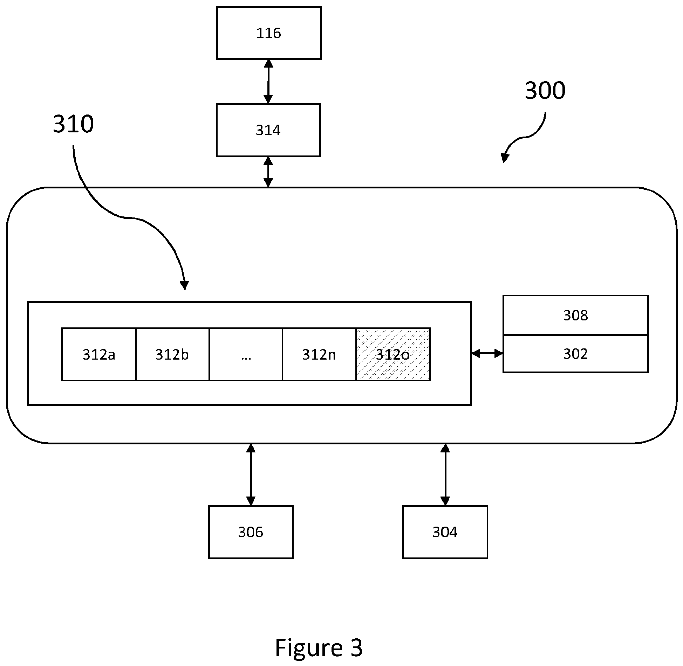

Figure 3 schematically illustrates another apparatus that can be used to implement a method for securing data of a computer system 300 from malware according to the invention. The computer system 300 may be a device based on ARM architecture. The computer system of Figure 3 is configured to use a Primary Operating System (PrimaryOS) for incrementally backing-up files in a manner that provides malware protection as explained later. PrimaryOS may be any operating system such as any version of MS Windows, Android, any Linux distribution such as Debian, Red Hat Linux or the like, any version of MacOS or other Unix-based operating systems.

Computer system 300 comprises at least one ARM processor 302, which may be a Cortex-M or Cortex-A ARM processor, although in other embodiments of the invention the computer system may comprise other processors.

The device of Figure 3 shares a number of features with the device of Figure 1, and therefore for brevity we note that it comprises a User Interface 304 similar to User Interface 104, a Device Interface 306 similar to Device Interface 106, a Networking Interface 314 similar to Networking Interface 114 to enable access to Cloud Storage 116 and a storage media 310 similar to storage media 110, and divided into portions and/or partitions accordingly.

However, unlike computer system 100, computer system 310 may not have TPM 108. Instead processor 203 may have a different, and in some embodiments integrated, Secure Element 308 which may enable Hypervisor operations, and additionally or alternatively Trustzone operations. Trustzone provides a foundation for system-wide security and the creation of a trusted platform and is configured to boot and reside in memory before any other operating system is loaded in the memory of computer system 300. Trustzone may provide an isolated environment from the environment of the PrimaryOS. Additionally, or alternatively, PrimaryOS may be a virtual operating system, running inside TrustZone. In some embodiments, a version of TrustedOS may be an application that is executable by Trustzone, such that Trustzone can perform the actions of TrustedOS described previously and/or later in this specification. Trustzone may be able to verify various aspects of the computer system 300 or of information stored on computer system 300 via a root of trust measurement operation.

Computer system 300 may be initially arranged so that a full copy of the initially loaded PrimaryOS (e.g. Android) is copied to a region which is then marked as read only or locked. Another region is designated as being available for a "backup partition" which is read/write. The partition table itself is marked read only. The Android system is configured to perform incremental backups onto the backup partition. At some point, either periodically, or when the system is under low usage (or both), the Android OS may request that TrustZone takes over control of the computer system 300. TrustZone with TrustedOS can then proceed with locking parts of the storage media 310 as explained below.

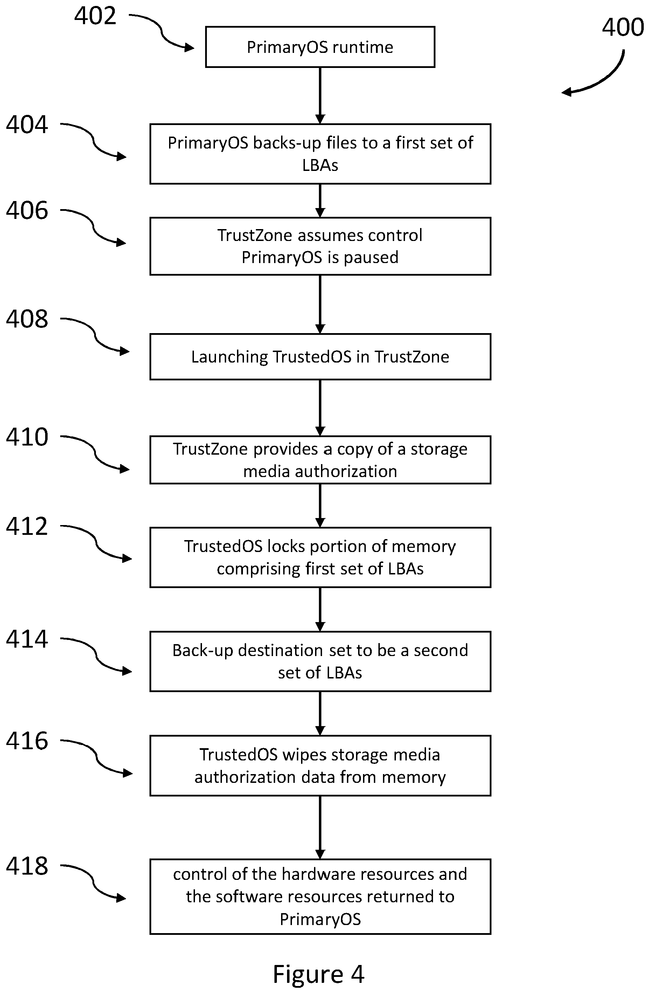

Figure 4 is a flow chart of a method 400 for providing data backup to a device like the one illustrated in Figure 3. At step 402, the computer system 300 is on PrimaryOS runtime. Computer system 300 may be configured to boot first into the Hypervisor (i.e. Trustzone), and subsequently the Hypervisor loads PrimaryOS. PrimaryOS is provided by the Hypervisor a set of hardware resources and software resources for backing-up files.

At step 404, PrimaryOS backs-up files to a first set of logical block addresses of storage media 310, wherein the first set of logical block addresses are on the first portion 312a of the storage media 310. Backing-up files may comprise incremental back-ups, wherein PrimaryOS only backs-up the data that has changed in each file since the previous backup, or full back-ups of each file irrespectively of whether the file has been previously backed-up.

At step 406, PrimaryOS is paused and control of the computer system is assumed by Trustzone. TrustZone may store the state of PrimaryOS to enable seamless resumption of PrimaryOS after the method 400 concludes. TrustZone has access and/or knowledge of the storage media authorization.

At step 408, TrustZone launches TrustedOS.

At step 410, TrustZone through TrustedOS provides a copy of a storage media authorization or alternatively TrustZone provides to TrustedOS a copy of a storage media authorization. The storage media authorization may be a first cryptographic key or a password and may be inaccessible by the PrimaryOS. At step 412, TrustedOS disables writing to the first portion 312a of the storage media 310, the first portion 312a comprising the first set of logical block addresses.

The process of disabling writing to the first portion 312a of the storage media 310 will be explained further in association with Figures 5 and 6.

At step 414, the TrustedOS configures PrimaryOS so that henceforth the PrimaryOS will back-up files to a second set of logical block addresses on a second writable portion 312b of the storage media 310. At step 416, TrustedOS may optionally erase the storage media authorization that was used to lock the first portion 312a from any memory accessible by the PrimaryOS. At step 418, TrustZone returns control of the hardware resources and the software resources to the PrimaryOS. As such, at the end of step 418, the execution environment of PrimaryOS is resumed or in other words the PrimaryOS is unpaused.

Figures 5a-5c schematically illustrate how TrustedOS may lock a previously unlocked portion of the storage media 110 or 310 to protect data against ransomware.

Figure 5a schematically illustrates an example of how storage media 110 or 310 may be during runtime of PrimaryOS according to an embodiment of the invention. Storage media 110 or 310 may be configured according to an OPAL configuration such that portions that comprise a set of LBAs may be locked or unlocked if authorization is provided. Storage media 110 or 310 may be separated in two partitions. The PrimaryOS or other operating systems may be stored and/or installed on partition 502, i.e. the "OS" partition whilst the rest of the storage media 110 or 310 form partition 504, i.e. the "data" partition. In Figures 5a-5c the partition 502 is a read-only partition, as indicated by the striped pattern, to reduce the likelihood of PrimaryOS being permanently compromised, although in other embodiments the PrimaryOS may be installed in a writable partition or portion of the storage media. Although in the illustrated example of Figure 5 the PrimaryOS is located in the storage media used to back-up the files, other embodiments of the invention may use separate storage media for storing the PrimaryOS and the backed-up files. The data partition 504 comprises a locked, or read-only portion 506, wherein previously backed-up files may be stored, although other embodiments may initially have all portions be writable.

In the example of Figure 5a, the PrimaryOS is configured to back-up files to first portion 508. When TrustedOS obtains the storage media authorization from the TPM or TrustZone accordingly as explained with respect to Figures 2 or 4, first portion 508 is locked as indicated in Figure 5b, and PrimaryOS is configured to henceforth back-up data on a second portion 510 of the data partition 504. The process may repeat as described in Figure 5c, wherein for a second time TrustedOS has been loaded and verified to be a predefined, i.e. uncompromised, and TrustedOS, based on the obtained storage media authorization locks second portion 510 and configures PrimaryOS to henceforth back-up date on a third portion 512.

Figures 6a-6c schematically illustrate another way that TrustedOS may employ to lock a previously unlocked portion of the storage media 110 or 310 to protect data against ransomware.

The storage media of Figures 6a-6c may be similar to the storage media described in Figures 5a-5c and included in computer systems 100 and 300, and thus comprise a read-only portion 606 and a first portion 608 which may have been already used to back-up files. However, in this example amending entries on the partition table of the storage media requires authorization, similar to the storage media authorization discussed above. Furthermore, read-only portion 606 may be part of a first partition 626, which is defined in the partition table of the storage media as read-only, whilst first portion 608 may be part of a second partition 628 which is defined in the partition table of the storage media as writable. The read-only portion 606 and the first portion 608 in Figure 6a share a boundary. As such, the process of disabling writing on the first portion 608 may comprise TrustedOS obtaining authorization from the TPM or TrustZone accordingly as explained with respect to Figures 2 or 4 to edit the entries on the partition table of the storage media such that the first partition 626 extends to encompass the LBAs of the first portion 608 which had been used to back-up files. Correspondingly, the second partition 628 contracts, and the PrimaryOS is configured to direct future back-ups of data on the unused LBAs of the first portion 608. If the system remains uncompromised, the process repeats as described in Figure 6c, wherein the TrustedOS, based on the obtained storage media authorization moves the boundary between the read-only first partition 626 and the writable second partition 628 such that previously used LBAs are moved to the read-only partition of the storage media.

Changing the size of the read-only portion 606 and the first portion 608 may include assigning an incrementally numbered label to each portion. The process may also comprise editing the partition table to create new partitions, which may also be assigned an incrementally numbered label. Assigning incrementally numbered labels to the portions is especially useful in embodiments comprising a hypervisor like TrustZone, as it enables an efficient way to indicate to PrimaryOS (e.g. Android) where new backups should be stored. As a result, seamless integration between TrustZone and Android is achieved, despite TrustZone manipulating data on the storage medium while Android is paused.

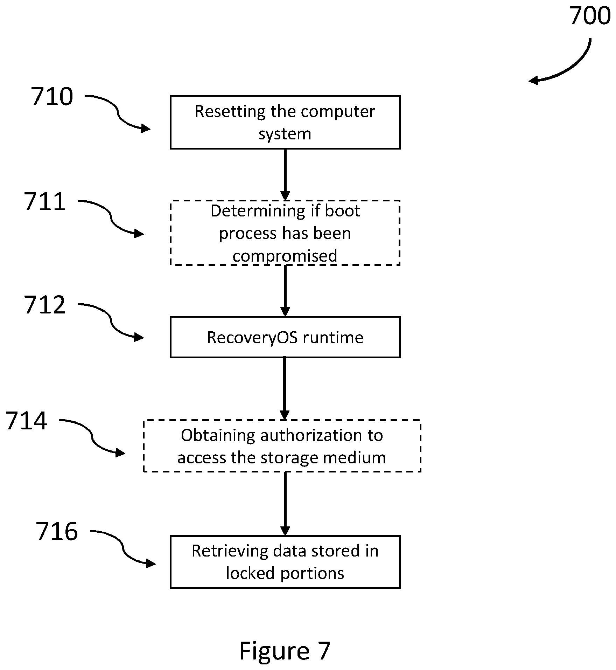

As noted above, the present disclosure includes three main aspects. These are: 1) the manner in which the system performs backups; 2) the manner in which the system us recovered in the event of a malware attack; and 3) the manner in which the system is initially set up. Figure 7 is a flow chart of a method 700 according to the disclosure for recovering a computer system following a malware attack. The recovery process requires that the system was previously backed up using any of the methods described in connection with Figures 2 or 4.

At step 710, the computer system is reset or powered on. Step 710 may comprise a cold boot and the computer system may be configured to boot into a Recovery Operating System (RecoveryOS). In some embodiments, the computer system may be configured such that every time it undergoes a power cycle, i.e. for cold or warm boots, the computer system must boot into RecoveryOS. In embodiments comprising a hypervisor like TrustZone as explained above, the RecoveryOS may comprise a set of applications that are executed by TrustZone prior to any other operating system is launched.

Optionally, prior to booting into the RecoveryOS, at step 711 the computer system may perform a CRTM operation to verify that the booting process is not compromised. The RecoveryOS may have been previously installed on a first read-only or locked portion of the storage medium. Alternatively, the RecoveryOS may be part of the Unified Extensible Firmware Interface (UEFI) used on the computer system, and/or be the same as TrustedOS.

At step 712, the RecoveryOS is in runtime, and enables access to at least one of the one or more data backups stored in locked portions or partitions of the storage media.

At step 716, the RecoveryOS retrieves or restores data previously stored in locked portions or partitions of a storage medium.

Optionally, accessing read-only portions of the storage medium may comprise the RecoveryOS obtaining authorization to access the storage medium from a secure element like the TPM or TrustZone. This process occurs before step 716, at step 714.

Further optionally, obtaining authorization to access the storage medium from a secure element like the TPM or TrustZone may comprise an RTM operation that verifies that the RecoveryOS has not been compromised, similar to the process described above with relation to TrustedOS, or an RTM operation that verifies that the boot sequence has not been compromised, based on ensuring that the values in PCR registers in the secure element are as predefined.

As such, the process of Figure 7 provides to a user a means to enter a recovery state. In this state, RecoveryOS and/or TrustZone provides the user the ability to restore the system to how it was initially setup and/or to evolve the computer system to comprise all changes in however many of the backup partitions have been made since the system was initially setup. To facilitate the process, the backed-up changes (i.e. restore points) may be displayed in order of creation. As such, the disclosures of this specification may be applied not only as a method to recover from a malware or ransomware attack, but as a method to return the computer system to various points in time, in a secure manner.

In embodiments where the storage medium is a self-encrypting drive, obtaining authorization to access the storage medium from a secure element may comprise the secure element providing a password, or cryptographic key required by the self-encrypting drive to encrypt and/or decrypt data stored on the self-encrypting drive.

Alternatively, or additionally, RecoveryOS may enable a user to return the computer system to an initial state, i.e. the state of the computer system when RecoveryOS was installed on the computer system. Advantageously, RecoveryOS is accessible even when the system has not been affected by a malware, and may enable restoring the one or more data backups to return the computer system to a state as was when the data backups were made.

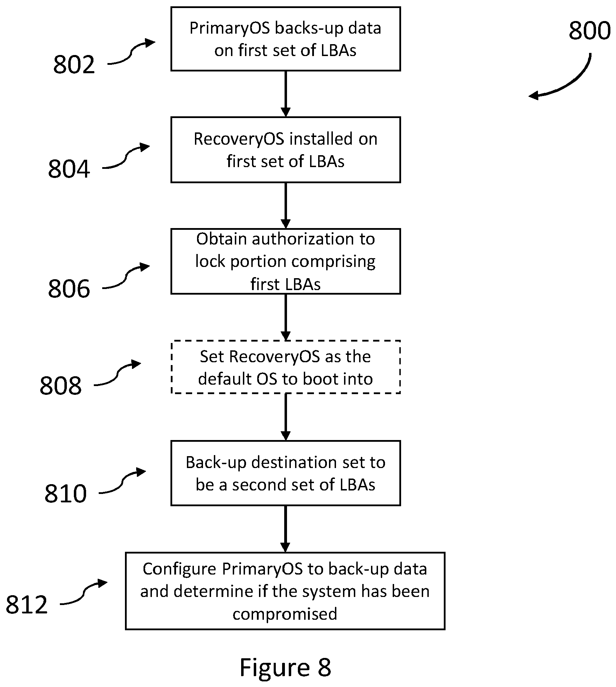

Figure 8 is a flow chart of a method according to the invention for configuring a computer system to back-up files using any of the methods illustrated in Figures 2 or 4.

At step 802, during runtime of PrimaryOS the computer system performs an initial back-up of files to a first set of LBAs on the storage media.

At step 804 RecoveryOS is installed to the first set of LBAs on the storage media, without overwriting the initial back-up of files.

At step 806, the computer system obtains authorization or authorization credentials from the TPM or TrustZone accordingly as explained with respect to Figures 2 and/or 4, to convert the first portion of the storage media to read-only, i.e. to lock the first portion of the storage media as explained with respect to Figures 5 and/or 6.

At step 808, the computer system may optionally configure the booting process to automatically boot into the RecoveryOS, unless a predefined input is provided to the computer system during the boot process.

At step 810, PrimaryOS is configured to henceforth perform back-ups on a second set of LBAs on the storage media, the second set of LBAs being on a writable portion or range of the storage media.

At step 812, PrimaryOS is configured to perform any of the methods of Figures 2 or 4.

Although the invention has been described above with reference to one or more preferred embodiments, it will be appreciated that various changes or modifications may be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

## Claims

1. A method for backing up data in a computer system (100), wherein the computer system (100) comprises:
a processor (102);
a non-transitory storage medium (110);
a Primary Operating System, PrimaryOS, stored on the non-transitory storage medium (110) and configured to control hardware resources and software resources of the computer system (100);
a secure element (108) configured to provide root of trust measurement, RTM, operations; and
one or more data backups, created by the PrimaryOS, and stored by the PrimaryOS in a first backup portion (112a) in a first writable partition of the non-transitory storage medium (110);
wherein the method is performed by the processor of the computer system, and comprises:
during a PrimaryOS run-time, loading a Trusted Operating System, TrustedOS, and pausing an execution environment of PrimaryOS;
determining that the TrustedOS is in a predefined state based on an RTM operation provided by the secure element (108);
in response to determining that the TrustedOS is in the predefined state based on the RTM operation provided by the secure element, providing, by the secure element (108), the TrustedOS with authorization to make the first backup portion (112a) of the non-transitory storage medium read-only;
making the first backup portion (112a) of the non-transitory storage medium read-only using the TrustedOS;
creating a second writable partition in the non-transitory storage medium;
configuring the PrimaryOS to perform a new backup to create a further data backup in a second backup portion (112b) in the second writable partition of the non-transitory storage medium (110); and
resuming the execution environment of the PrimaryOS.

2. The method according to claim 1, further comprising:
determining that the TrustedOS is not in the predefined state; and
in response to determining that the TrustedOS is not in the predefined state, undertaking no further backups and identifying that failing to verify that the TrustedOS is in the predefined state is caused by malware or ransomware.

3. A method according to claim 1 or 2, wherein:
the first writable partition of the non-transitory storage medium shares a boundary with a read-only partition;
making the first backup portion of the non-transitory storage medium read-only comprises moving the boundary between the first writable partition and the read-only partition such that, after moving the boundary, the read-only partition comprises the first backup portion;
moving the boundary between the first writable partition and the read-only partition comprises amending a partition table of the non-transitory storage medium; and
amending the partition table of the non-transitory storage medium requires authorization by the non-transitory storage medium.

4. The method according to any one of the preceding claims, wherein the non-transitory storage medium comprises a plurality of backup portions, the plurality of backup portions comprising the first and second backup portions; and
wherein each portion of the plurality of backup portions is in a writable state or a read-only state and changing the state of the portions requires authorization by the non-transitory storage medium.

5. The method according to claim 4, wherein the authorization provided by the secure element to the TrustedOS is the authorization required by the non-transitory storage medium.

6. The method according to any one of the preceding claims, wherein at least one of the following is true:
the PrimaryOS periodically performs incremental back-up of files to writable portions on the non-transitory storage medium during runtime;
the authorization is verified by a password-based system, a D-RTM operation, or a TrustZone operation;
the one or more data backups and the further backup include one or more of: (i) a full backup of all system data, (ii) a backup of the PrimaryOS and system applications, including user settings, or (iii) a backup user of user data; and
the one or more backups comprise an initial backup and one or more incremental backups, and the further backup is an incremental backup.

7. The method according to any one of the preceding claims, wherein the computer system performs TrustZone operations and wherein the TrustedOS obtains a cryptographic key based on a TrustZone operation, wherein the steps performed by the TrustedOS are part of the TrustZone operations.

8. The method according to claim 1, wherein the non-transitory storage medium is a self-encrypting drive, is removable, or is part of a cloud storage system.

9. The method according to any one of the preceding claims, wherein the PrimaryOS is stored on an operating system partition of the non-transitory storage medium.

10. A system for backing up data, the system comprises
a processor (302); and
a non-transitory storage medium (310) comprising:
a secure element (308) configured to provide root of trust measurement, RTM, operations;
a Hypervisor configured to control hardware resources and software resources of the system based on the secure element;
a Primary Operating System, PrimaryOS, and configured to be provided at least a subset of the hardware resources and the software resources of the system by the Hypervisor;
a first writable partition comprising a first backup portion (312a) with one or more data backups, configured to be created by the PrimaryOS, and stored by the PrimaryOS on the first backup portion; and
further instructions that are executable by the processor (302) for causing the processor (302) to perform operations, the operations comprising:
during a PrimaryOS run-time, pausing an execution environment of PrimaryOS;
launching, by the Hypervisor, a Trusted Operating System, TrustedOS;
providing, by the Hypervisor, the TrustedOS with authorization to make the first backup portion (312a) of the storage medium (310) read-only;
making the first backup portion (312a) of the storage medium read-only using the TrustedOS;
creating a second writable partition in the non-transitory storage medium;
configuring the PrimaryOS to perform a new backup to create a further data backup in a second backup portion (312b) in the second writable partition of the non-transitory storage medium (310); and
resuming the execution environment of the PrimaryOS.

11. The system of claim 10, wherein the operation of providing the TrustedOS with authorization includes: providing, by the secure element, the TrustedOS with a copy of an authorization value stored in the secure element, and
wherein the operations further comprise removing, by the TrustedOS, the copy of the authorization value from any storage medium accessible to the PrimaryOS before resuming the execution environment of the PrimaryOS,
and/or
wherein the operations further comprise: using, by the TrustedOS, the copy of the authorization value to provide authorization for making the first backup portion read-only.

12. The system of claim 10 or 11, wherein:
the first writable partition of the non-transitory storage medium shares a boundary with a read-only partition;
the operations further comprise:
making the first backup portion of the non-transitory storage medium read-only comprises moving the boundary between the first writable partition and the read-only partition such that, after moving the boundary, the read-only partition comprises the first backup portion;
moving the boundary between the first writable partition and the read-only partition comprises amending a partition table of the non-transitory storage medium; and
amending the partition table of the non-transitory storage medium requires authorization by the non-transitory storage medium.

13. The system of any one of claims 10 to 12, wherein the non-transitory storage medium comprises a plurality of backup portions, the plurality of backup portions comprising the first and second backup portions,
wherein each portion of the plurality of backup portions is in a writable state or a read-only state, and
wherein the operations further comprise changing the state of the portions only in response to receiving authorization by the non-transitory storage medium.

14. The system of any one of claims 10 to 13, wherein the non-transitory storage medium is a self-encrypting drive, is removable, or is part of a cloud storage system,
wherein the PrimaryOS is stored on an operating system partition of the non-transitory storage medium.

15. A computer-readable medium comprising instructions which, when executed by a processor, cause the processor to carry out the method of any one of claims 1 to 9.

## Patentansprüche

1. Verfahren zum Sichern von Daten in einem Rechnersystem (100), wobei das Rechnersystem (100) umfasst:
einen Prozessor (102);
ein nicht-flüchtiges Speichermedium (110);
ein primäres Betriebssystem, PrimaryOS, das auf dem nicht-flüchtigen Speichermedium (110) gespeichert ist und ausgebildet ist, um Hardware-Ressourcen und Software-Ressourcen des Rechnersystems (100) zu steuern;
ein sicheres Element (108), das ausgebildet ist, um Root-of-Trust-Messung-, RTM-, Operationen bereitzustellen; und
eine oder mehrere Datensicherungen, die von dem PrimaryOS erstellt werden, und von dem PrimaryOS in einem ersten Sicherungsabschnitt (112a) in einer ersten beschreibbaren Partition des nicht-flüchtigen Speichermediums (110) gespeichert werden;
wobei das Verfahren von dem Prozessor des Rechnersystems durchgeführt wird und umfasst:
während einer Laufzeit von PrimaryOS, Laden eines vertrauenswürdigen Betriebssystems, TrustedOS, und Anhalten einer Ausführungsumgebung von PrimaryOS;
Bestimmen, dass sich das TrustedOS in einem vordefinierten Zustand befindet, auf der Grundlage einer RTM-Operation, die von dem sicheren Element (108) bereitgestellt wird;
als Reaktion auf das Bestimmen, dass sich das TrustedOS in dem vordefinierten Zustand befindet, auf der Grundlage der von dem sicheren Element bereitgestellten RTM-Operation, Bereitstellen dem TrustedOS durch das sichere Element (108) einer Berechtigung, den ersten Sicherungsabschnitt (112a) des nicht-flüchtigen Speichermediums schreibgeschützt zu machen;
Schreibgeschütztmachen des ersten Sicherungsabschnitts (112a) des nicht-flüchtigen Speichermediums unter Verwendung des TrustedOS;
Erstellen einer zweiten beschreibbaren Partition im nicht-flüchtigen Speichermedium;
Ausbilden des PrimaryOS, um eine neue Sicherung durchzuführen, um eine weitere Datensicherung in einem zweiten Sicherungsabschnitt (112b) in der zweiten beschreibbaren Partition des nicht-flüchtigen Speichermediums (110) zu erstellen; und
Wiederaufnehmen der Ausführungsumgebung des PrimaryOS.

2. Verfahren nach Anspruch 1, weiter umfassend:
Bestimmen, dass sich das TrustedOS nicht im vordefinierten Zustand befindet; und
als Reaktion auf das Bestimmen, dass sich das TrustedOS nicht im vordefinierten Zustand befindet, Unternehmen keiner weiteren Sicherungen und Identifizieren, dass das Unterlassen einer Verifizierung, dass sich das TrustedOS im vordefinierten Zustand befindet, durch Malware oder Ransomware veranlasst wird.

3. Verfahren nach Anspruch 1 oder 2, wobei:
sich die erste beschreibbare Partition des nicht-flüchtigen Speichermediums eine Grenze mit einer schreibgeschützten Partition teilt;
Schreibgeschütztmachen des ersten Sicherungsabschnitts des nicht-flüchtigen Speichermediums das Bewegen der Grenze zwischen der ersten beschreibbaren Partition und der schreibgeschützten Partition umfasst, sodass nach dem Bewegen der Grenze die schreibgeschützte Partition des lokalen Speichers den ersten Sicherungsabschnitt umfasst;
Bewegen der Grenze zwischen der ersten beschreibbaren Partition und der schreibgeschützten Partition das Ändern einer Partitionstabelle des nicht-flüchtigen Speichermediums umfasst; und
Ändern der Partitionstabelle des nicht-flüchtigen Speichermediums einer Berechtigung durch das nicht-flüchtige Speichermedium bedarf.

4. Verfahren nach einem der vorstehenden Ansprüche, wobei das nicht-flüchtige Speichermedium eine Vielzahl von Sicherungsabschnitten umfasst, wobei die Vielzahl von Sicherungsabschnitten den ersten und zweiten Sicherungsabschnitt umfasst; und
wobei sich jeder Abschnitt der Vielzahl von Sicherungsabschnitten in einem beschreibbaren Zustand oder schreibgeschützten Zustand befindet, und Ändern des Zustands der Abschnitte einer Berechtigung durch das nicht-flüchtige Speichermedium bedarf.

5. Verfahren nach Anspruch 4, wobei die dem TrustedOS von dem sicheren Element bereitgestellte Berechtigung die von dem nicht-flüchtigen Speichermedium erforderliche Berechtigung ist.

6. Verfahren nach einem der vorstehenden Ansprüche, wobei mindestens eines von Folgendem zutrifft:
das PrimaryOS führt während der Laufzeit regelmäßig inkrementelle Sicherungen von Dateien in beschreibbaren Abschnitten auf dem nicht-flüchtigen Speichermedium durch;
die Berechtigung wird durch ein passwortbasiertes System, eine D-RTM-Operation oder eine TrustZone-Operation verifiziert;
die eine oder mehrere Datensicherungen und die weitere Sicherung schließen eines oder mehrere ein von: (i) einer vollständigen Sicherung aller Systemdaten, (ii) einer Sicherung der PrimaryOS- und Systemanwendungen, die Benutzereinstellungen einschließen, oder (iii) einem Sicherungsnutzer von Benutzerdaten; und
wobei die eine oder mehrere Sicherungen eine anfängliche Sicherung und eine oder mehrere inkrementelle Sicherungen umfassen, und die weitere Sicherung eine inkrementelle Sicherung ist.

7. Verfahren nach einem der vorstehenden Ansprüche, wobei das Rechnersystem TrustZone-Operationen durchführt und wobei das TrustedOS einen kryptografischen Schlüssel auf der Grundlage einer TrustZone-Operation erhält, wobei die von dem TrustedOS durchgeführten Schritte Teil der TrustZone-Operation sind.

8. Verfahren nach Anspruch 1, wobei das nicht-flüchtige Speichermedium ein selbstverschlüsselndes Laufwerk ist, herausnehmbar ist oder Teil eines Cloud-Speichersystems ist.

9. Verfahren nach einem der vorstehenden Ansprüche, wobei das PrimaryOS auf einer Betriebssystempartition des nicht-flüchtigen Speichermediums gespeichert ist.

10. System zum Sichern von Daten, wobei das System umfasst
einen Prozessor (302); und
ein nicht-flüchtiges Speichermedium (310) umfassend:
ein sicheres Element (308), das ausgebildet ist, um Root-of-Trust-Messungs-, RTM-, Operationen bereitzustellen;
einen Hypervisor, der ausgebildet ist, um Hardware-Ressourcen und Software-Ressourcen des Systems auf der Grundlage des sicheren Elements zu steuern;
ein primäres Betriebssystem, PrimaryOS, das ausgebildet ist, um mindestens einer Teilmenge der Hardware-Ressourcen und der Software-Ressourcen des Systems durch den Hypervisor bereitgestellt zu werden;
eine erste beschreibbare Partition, die einen ersten Sicherungsabschnitt (312a) mit einer oder mehreren Datensicherungen umfasst, die ausgebildet sind, um von dem PrimaryOS erstellt und von dem PrimaryOS auf dem ersten Sicherungsabschnitt gespeichert zu werden; und
weitere Anweisungen, die von dem Prozessor (302) ausführbar sind, um den Prozessor (302) zur Durchführung von Operationen zu veranlassen, wobei die Operationen umfassen:
während einer PrimaryOS-Laufzeit, Anhalten einer Ausführungsumgebung von PrimaryOS;
Starten eines vertrauenswürdigen Betriebssystems, TrustedOS, durch den Hypervisor;
Bereitstellen dem TrustedOS durch den Hypervisor der Berechtigung, den ersten Sicherungsabschnitt (312a) des Speichermediums (310) schreibgeschützt zu machen;
Schreibgeschütztmachen des ersten Sicherungsabschnitts (312a) des Speichermediums unter Verwendung von TrustedOS;
Erstellen einer zweiten beschreibbaren Partition im nicht-flüchtigen Speichermedium;
Konfigurieren des PrimaryOS, um eine neue Sicherung durchzuführen, um eine weitere Datensicherung in einem zweiten Sicherungsabschnitt (312b) in der zweiten beschreibbaren Partition des nicht-flüchtigen Speichermediums (310) zu erstellen; und
Wiederaufnehmen der Ausführungsumgebung des PrimaryOS.

11. System nach Anspruch 10, wobei die Operation zum Bereitstellen der TrustedOS mit Berechtigung einschließt: Bereitstellen dem TrustedOS durch das sichere Element einer Kopie eines Berechtigungswertes, der in dem sicheren Element gespeichert ist, und
wobei die Operationen weiter das Entfernen durch das TrustedOS der Kopie des Berechtigungswertes von jedem Speichermedium umfassen, auf welches das PrimaryOS zugreifen kann, bevor die Ausführungsumgebung des PrimaryOS wieder aufgenommen wird,
und/oder
wobei die Operationen weiter umfassen: Verwenden durch TrustedOS der Kopie des Berechtigungswertes, um eine Berechtigung bereitzustellen, um den ersten Sicherungsabschnitt schreibgeschützt zu machen.

12. System nach Anspruch 10 oder 11, wobei:
sich die erste beschreibbare Partition des nicht-flüchtigen Speichermediums eine Grenze mit einer schreibgeschützten Partition teilt;
wobei die Operationen weiter umfassen:
Schreibgeschütztmachen des ersten Sicherungsabschnitts des nicht-flüchtigen Speichermediums umfasst das Bewegen der Grenze zwischen der ersten beschreibbaren Partition und der schreibgeschützten Partition, sodass nach Bewegen der Grenze die schreibgeschützte Partition von dem lokalen Speicher den ersten Sicherungsabschnitt umfasst;
Bewegen der Grenze zwischen der ersten beschreibbaren Partition und der schreibgeschützten Partition umfasst das Ändern einer Partitionstabelle des nicht-flüchtigen Speichermediums; und
Ändern der Partitionstabelle des nicht-flüchtigen Speichermediums bedarf der Berechtigung durch das nicht-flüchtige Speichermedium.

13. System nach einem der Ansprüche 10 bis 12, wobei das nicht-flüchtige Speichermedium eine Vielzahl von Sicherungsabschnitten umfasst, wobei die Vielzahl von Sicherungsabschnitten den ersten und zweiten Sicherungsabschnitt umfasst,
wobei jeder Abschnitt der Vielzahl von Sicherungsabschnitten in einem beschreibbaren Zustand oder einem schreibgeschützten Zustand ist, und
wobei die Operationen weiter das Ändern des Zustands der Abschnitte nur als Reaktion auf das Empfangen einer Berechtigung durch das nicht-flüchtige Speichermedium umfassen.

14. System nach einem der Ansprüche 10 bis 13, wobei das nicht-flüchtige Speichermedium ein selbstverschlüsselndes Laufwerk ist, herausnehmbar ist oder Teil eines Cloud-Speichersystems ist,
wobei das PrimaryOS auf einer Betriebssystempartition des nicht-flüchtigen Speichermediums gespeichert ist.

15. Computerlesbares Medium, umfassend Anweisungen, die, wenn sie von einem Prozessor ausgeführt werden, den Prozessor veranlassen, das Verfahren nach einem der Ansprüche 1 bis 9 durchzuführen.

## Revendications

1. Procédé de sauvegarde de données dans un système informatique (100), dans lequel le système informatique (100) comprend :
un processeur (102) ;
un support de stockage non transitoire (110) ;
un système d'exploitation primaire, PrimaryOS, stocké sur le support de stockage non transitoire (110) et configuré pour commander des ressources matérielles et des ressources logicielles du système informatique (100) ;
un élément sécurisé (108) configuré pour fournir des opérations de mesure de racine de confiance, RTM ; et
une ou plusieurs sauvegardes de données, créées par le PrimaryOS, et stockées par le PrimaryOS dans une première portion de sauvegarde (112a) dans une première partition inscriptible du support de stockage non transitoire (110) ;
dans lequel le procédé est réalisé par le processeur du système informatique, et comprend :
pendant une exécution de PrimaryOS, le chargement d'un système d'exploitation de confiance, TrustedOS, et la mise en pause d'un environnement d'exécution de PrimaryOS ;
la détermination que le TrustedOS est dans un état prédéfini sur la base d'une opération RTM fournie par l'élément sécurisé (108) ;
en réponse à la détermination que le TrustedOS est dans l'état prédéfini sur la base de l'opération RTM fournie par l'élément sécurisé, la fourniture, par l'élément sécurisé (108), au TrustedOS d'une autorisation de mettre la première portion de sauvegarde (112a) du support de stockage non transitoire en lecture seule ;
la mise de la première portion de sauvegarde (112a) du support de stockage non transitoire en lecture seule en utilisant le TrustedOS ;
la création d'une deuxième partition inscriptible dans le support de stockage non transitoire ;
la configuration du PrimaryOS pour réaliser une nouvelle sauvegarde afin de créer une autre sauvegarde de données dans une deuxième portion de sauvegarde (112b) dans la deuxième partition inscriptible du support de stockage non transitoire (110) ; et
la reprise de l'environnement d'exécution du PrimaryOS.

2. Procédé selon la revendication 1, comprenant en outre :
la détermination que le TrustedOS n'est pas dans l'état prédéfini ; et
en réponse à la détermination que le TrustedOS n'est pas dans l'état prédéfini, la non-réalisation d'aucune autre sauvegarde et l'identification que l'échec de la vérification que le TrustedOS est dans l'état prédéfini est causé par un logiciel malveillant ou un logiciel rançonneur.

3. Procédé selon la revendication 1 ou la revendication 2, dans lequel :
la première partition inscriptible du support de stockage non transitoire partage une frontière avec une partition en lecture seule ;
la mise de la première portion de sauvegarde du support de stockage non transitoire en lecture seule comprend le déplacement de la frontière entre la première partition inscriptible et la partition en lecture seule de telle sorte qu'après avoir déplacé la frontière, la partition en lecture seule du dispositif de stockage local comprend la première portion de sauvegarde ;
le déplacement de la frontière entre la première partition inscriptible et la partition en lecture seule comprend la modification d'une table de partition du support de stockage non transitoire ; et
la modification de la table de partition du support de stockage non transitoire nécessite une autorisation par le support de stockage non transitoire.

4. Procédé selon l'une quelconque des revendications précédentes, dans lequel le support de stockage non transitoire comprend une pluralité de portions de sauvegarde, la pluralité de portions de sauvegarde comprenant les première et deuxième portions de sauvegarde ; et
dans lequel chaque portion de la pluralité de portions de sauvegarde est dans un état inscriptible ou un état en lecture seule et le changement de l'état des portions nécessite une autorisation par le support de stockage non transitoire.

5. Procédé selon la revendication 4, dans lequel l'autorisation fournie par l'élément sécurisé au TrustedOS est l'autorisation requise par le support de stockage non transitoire.

6. Procédé selon l'une quelconque des revendications précédentes, dans lequel au moins une des conditions suivantes est vraie :
le PrimaryOS réalise périodiquement une sauvegarde incrémentielle de fichiers dans des portions inscriptibles sur le support de stockage non transitoire pendant l'exécution ;
l'autorisation est vérifiée par un système basé sur un mot de passe, une opération D-RTM ou une opération TrustZone ;
les une ou plusieurs sauvegardes de données et l'autre sauvegarde incluent une ou plusieurs parmi : (i) une sauvegarde complète de toutes les données système, (ii) une sauvegarde du PrimaryOS et des applications système, incluant des paramètres utilisateur, ou (iii) une sauvegarde utilisateur de données utilisateur ; et
les une ou plusieurs sauvegardes comprennent une sauvegarde initiale et une ou plusieurs sauvegardes incrémentielles, et l'autre sauvegarde est une sauvegarde incrémentielle.

7. Procédé selon l'une quelconque des revendications précédentes, dans lequel le système informatique réalise des opérations TrustZone et dans lequel le TrustedOS obtient une clé cryptographique sur la base d'une opération TrustZone, dans lequel les étapes réalisées par le TrustedOS font partie des opérations TrustZone.

8. Procédé selon la revendication 1, dans lequel le support de stockage non transitoire est un disque à auto-chiffrement, est amovible, ou fait partie d'un système de stockage en nuage.

9. Procédé selon l'une quelconque des revendications précédentes, dans lequel le PrimaryOS est stocké sur une partition du système d'exploitation du support de stockage non transitoire.

10. Système de sauvegarde de données, le système comprend
un processeur (302) ; et
un support de stockage non transitoire (310) comprenant :
un élément sécurisé (308) configuré pour fournir des opérations de mesure de racine de confiance, RTM ;
un hyperviseur configuré pour commander des ressources matérielles et des ressources logicielles du système sur la base de l'élément sécurisé ;
un système d'exploitation primaire, PrimaryOS, et configuré pour être muni d'au moins un sous-ensemble des ressources matérielles et des ressources logicielles du système par l'hyperviseur ;
une première partition inscriptible comprenant une première portion de sauvegarde (312a) avec une ou plusieurs sauvegardes de données, configurées pour être créées par le PrimaryOS, et stockées par le PrimaryOS sur la première portion de sauvegarde ; et
d'autres instructions qui sont exécutables par le processeur (302) pour amener le processeur (302) à réaliser des opérations, les opérations comprenant :
pendant une exécution de PrimaryOS, la mise en pause d'un environnement d'exécution de PrimaryOS ;
le lancement, par l'hyperviseur, d'un système d'exploitation de confiance, TrustedOS ;
la fourniture, par l'hyperviseur, au TrustedOS de l'autorisation de mettre la première portion de sauvegarde (312a) du support de stockage (310) en lecture seule ;
la mise de la première portion de sauvegarde (312a) du support de stockage en lecture seule en utilisant le TrustedOS ;
la création d'une deuxième partition inscriptible dans le support de stockage non transitoire ;
la configuration du PrimaryOS pour réaliser une nouvelle sauvegarde afin de créer une autre sauvegarde de données dans une deuxième portion de sauvegarde (312b) dans la deuxième partition inscriptible du support de stockage non transitoire (310) ; et
la reprise de l'environnement d'exécution du PrimaryOS.

11. Système selon la revendication 10, dans lequel l'opération de la fourniture d'une autorisation au TrustedOS inclut : la fourniture, par l'élément sécurisé, au TrustedOS d'une copie d'une valeur d'autorisation stockée dans l'élément sécurisé, et
dans lequel les opérations comprennent en outre la suppression, par le TrustedOS, de la copie de la valeur d'autorisation de tout support de stockage accessible au PrimaryOS avant la reprise de l'environnement d'exécution du PrimaryOS,
et/ou
dans lequel les opérations comprennent en outre : l'utilisation, par le TrustedOS, de la copie de la valeur d'autorisation pour fournir une autorisation de mettre la première portion de sauvegarde en lecture seule.

12. Système selon la revendication 10 ou la revendication 11, dans lequel :
la première partition inscriptible du support de stockage non transitoire partage une frontière avec une partition en lecture seule ;
les opérations comprennent en outre :
la mise de la première portion de sauvegarde du support de stockage non transitoire en lecture seule comprend le déplacement de la frontière entre la première partition inscriptible et la partition en lecture seule de telle sorte qu'après avoir déplacé la frontière, la partition en lecture seule du dispositif de stockage local comprend la première portion de sauvegarde ;
le déplacement de la frontière entre la première partition inscriptible et la partition en lecture seule comprend la modification d'une table de partition du support de stockage non transitoire ; et
la modification de la table de partition du support de stockage non transitoire nécessite une autorisation du support de stockage non transitoire.

13. Système selon l'une quelconque des revendications 10 à 12, dans lequel le support de stockage non transitoire comprend une pluralité de portions de sauvegarde, la pluralité de portions de sauvegarde comprenant les première et deuxième portions de sauvegarde,
dans lequel chaque portion de la pluralité de portions de sauvegarde est dans un état inscriptible ou un état en lecture seule, et
dans lequel les opérations comprennent en outre le changement de l'état des portions uniquement en réponse à la réception d'une autorisation du support de stockage non transitoire.

14. Système selon l'une quelconque des revendications 10 à 13, dans lequel le support de stockage non transitoire est un disque à auto-chiffrement, est amovible, ou fait partie d'un système de stockage en nuage,
dans lequel le PrimaryOS est stocké sur une partition du système d'exploitation du support de stockage non transitoire.

15. Support lisible par ordinateur comprenant des instructions qui, lorsqu'elles sont exécutées par un processeur, amènent le processeur à mettre en œuvre le procédé selon l'une quelconque des revendications 1 à 9.
